# EUROPEAN PATENT SPECIFICATION

(11) **EP 3 013 109 B1**
(45) Date of publication and mention of the grant of the patent: **19.07.2017**
(21) Application number: 15191006.4
(22) Date of filing: 22.10.2015
(51) Int. Cl.: H04W 72/12, H04L 5/00

(54) **DEVICE OF HANDLING RESOURCE AVAILABILITY OF UNLICENSED BAND**
VORRICHTUNG ZUR HANDHABUNG DER RESSOURCENVERFÜGBARKEIT EINES NICHTLIZENZIERTEN BANDES
DISPOSITIF DE GESTION DE DISPONIBILITÉ DE RESSOURCES D'UNE BANDE SANS LICENCE

(30) Priority: 22.10.2014 US 201462066924 P
(43) Date of publication of application: 27.04.2016
(73) Proprietor: HTC Corporation, Taoyuan City 330 (TW)
(72) Inventor: YE, Shiang-Rung, Taoyuan District Taoyuan City 330 (TW)
(74) Representative: Klang, Alexander H.

(56) References cited:
- US-A1- 2014 112 289
- LG ELECTRONICS: "Candidate solutions for LAA operation", 3GPP DRAFT; R1-144042 LAA CANDIDATE SOLUTIONS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 27 September 2014 (2014-09-27), XP050869704, Retrieved from the Internet: URL:http://www.3gpp.org/ftp/tsg_ran/WG1_RL 1/TSGR1_78b/Docs/ [retrieved on 2014-09-27]
- ALCATEL-LUCENT SHANGHAI BELL ET AL: "Considerations on LBT Enhancements for Licensed- Assisted Access", 3GPP DRAFT; R1-144083 - LBT - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20140806 - 20140810 5 October 2014 (2014-10-05), XP050895043, Retrieved from the Internet: URL:http://www.3gpp.org/ftp/Meetings_3GPP_ SYNC/RAN1/Docs/ [retrieved on 2014-10-05]
- NOKIA NETWORKS ET AL: "Listen Before Talk and Channel Access", 3GPP DRAFT; R1-144187, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Ljubljana, Slovenia; 20141006 - 20141010 27 September 2014 (2014-09-27), XP050869831, Retrieved from the Internet: URL:http://www.3gpp.org/ftp/tsg_ran/WG1_RL 1/TSGR1_78b/Docs/ [retrieved on 2014-09-27]

## Description

### Background of the Invention

### 1. Field of the Invention

The present invention relates to a communication device used in a wireless communication system, and more particularly, to a communication device of handling resource availability of an unlicensed band in a wireless communication system.

### 2. Description of the Prior Art

A long-term evolution (LTE) system supporting the 3rd Generation Partnership Project (3GPP) Rel-8 standard and/or the 3GPP Rel-9 standard are developed by the 3GPP as a successor of the universal mobile telecommunication system (UMTS) for further enhancing performance of the UMTS to satisfy increasing needs of users. The LTE system includes a new radio interface and a new radio network architecture that provides high data rate, low latency, packet optimization, and improved system capacity and coverage. In the LTE system, a radio access network known as an evolved universal terrestrial radio access network (E-UTRAN) includes at least one evolved Node-B (eNB) for communicating with at least one user equipment (UE), and for communicating with a core network including a mobility management entity (MME), a serving gateway, etc., for Non-Access Stratum (NAS) control.

A LTE-advanced (LTE-A) system, as its name implies, is an evolution of the LTE system. The LTE-A system targets faster switching between power states, improves performance at the coverage edge of an eNB, increases peak data rate and throughput, and includes advanced techniques, such as carrier aggregation (CA), coordinated multipoint (CoMP) transmissions/reception, uplink (UL) multiple-input multiple-output (UL-MIMO), licensed-assisted access (LAA) using LTE, etc. For a UE and an eNB to communicate with each other in the LTE-A system, the UE and the eNB must support standards developed for the LTE-A system, such as the 3GPP Rel-10 standard or later versions.

Network operators propose to offload network traffic of the LTE/LTE-A system to an unlicensed band, to ease load of the network traffic. For example, the eNB may provide services to the UE via the unlicensed band. However, available resource in the unlicensed band is usually dynamic, and it is not easy for the eNB to allocate the resource in the unlicensed band. The operations on the unlicensed band are even more complicated, when the UE operates on both a licensed band and the unlicensed band. The UE is not able to perform a (e.g. , scheduled) transmission with the eNB, if resource in the unlicensed band is not available. The transmission may include a new transmission or a retransmission. The eNB operates incorrectly, if the scheduled transmission is not transmitted. For example, the eNB may combine received packets with empty transmission erroneously, and a worse result is obtained.

With regard to the available prior art, attention is drawn to the following documents:
LG ELECTRONICS, "Candidate solutions for LAA operation", RAN WG1, Ljubljana, Slovenia; 27 September 2014, 3GPP DRAFT; R1-144042 LAA CANDIDATE SOLUTIONS_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE
ALCATEL-LUCENT SHANGHAI BELL ET AL, "Considerations on LBT Enhancements for Licensed- Assisted Access", RAN WG1, Ljubljana, Slovenia; 5 October 2014, 3GPP DRAFT; R1-144083 - LBT - FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE
NOKIA NETWORKS ET AL, "Listen Before Talk and Channel Access", RAN WG1, Ljubljana, Slovenia; 27 September 2014, 3GPP DRAFT; R1-144187, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE

US 2014/112289 A1 discloses a method for transmitting a signal to an unlicensed band of a base station in a wireless communication system. The method comprises the steps of: transmitting at least one of a preamble and a reservation signal, if it is determined through carrier sensing that the unlicensed band is available; and transmitting a PDSCH on the unlicensed band immediately after the transmission of at least one of the preamble and the reservation signal. the preamble enables a terminal to acquire reception synchronization for at least one of the reservation signal and the PDSCH.

Thus, handling of resource availability of an unlicensed band is an important problem to be solved.

### Summary of the Invention

The present invention therefore provides a communication device for handling resource availability of an unlicensed band to solve the abovementioned problem.

According to the present invention, a communication device for handling resource availability of an unlicensed band is provided as set forth in claim 1. Preferred embodiments of the present invention may be gathered from the dependent claims.

These and other objectives of the present invention will no doubt become obvious to those of ordinary skill in the art after reading the following detailed description of the preferred embodiment that is illustrated in the various figures and drawings.

### Brief Description of the Drawings

Fig. 1 is a schematic diagram of a wireless communication system according to an example of the present invention.
Fig. 2 is a schematic diagram of a communication device according to an example of the present invention.
Fig. 3 is a flowchart of a process according to an example of the present invention.
Fig. 4 is a flowchart of a process according to an example of the present invention.

### Detailed Description

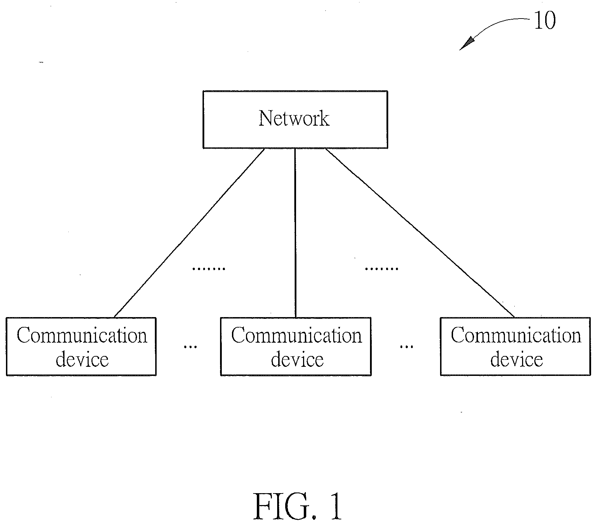

Please refer to Fig. 1, which is a schematic diagram of a wireless communication system 10 according to an example of the present invention. The wireless communication system 10 is briefly composed of a network and a plurality of communication devices. The network and a communication device may communicate with each other via one or more carriers of licensed band (s) and/or unlicensed band (s). The network and the communication device may simultaneously communicate with each other via multiple cells (e.g., multiple carriers) including a primary cell (e.g., primary component carrier) and one or more secondary cells (e.g. , secondary component carriers) . The abovementioned cells may be operated in the same or different duplexing modes, i.e. frequency-division duplexing (FDD) and time-division duplexing (TDD). For example, the primary cell may be operated on licensed carrier(s), while the secondary cell may be operated on unlicensed carrier(s).

In Fig. 1, the network and the communication devices are simply utilized for illustrating the structure of the wireless communication system 10. Practically, the network may be an evolved UTRAN (E-UTRAN) including at least one evolved NB (eNB) and/or at least one relay in a long term evolution (LTE) system, a LTE-Advanced (LTE-A) system or an evolution of the LTE-A system. The eNB or the relay may be termed as a base station.

A communication device may be a user equipment (UE), a low cost device (e.g., machine type communication (MTC) device), a device-to-device (D2D) device, a mobile phone, a laptop, a tablet computer, an electronic book, a portable computer system, a vehicle, or combination thereof. In addition, the network and the communication device can be seen as a transmitter or a receiver according to direction (i.e., transmission direction), e.g., for an uplink (UL), the communication device is the transmitter and the network is the receiver, and for a downlink (DL), the network is the transmitter and the communication device is the receiver.

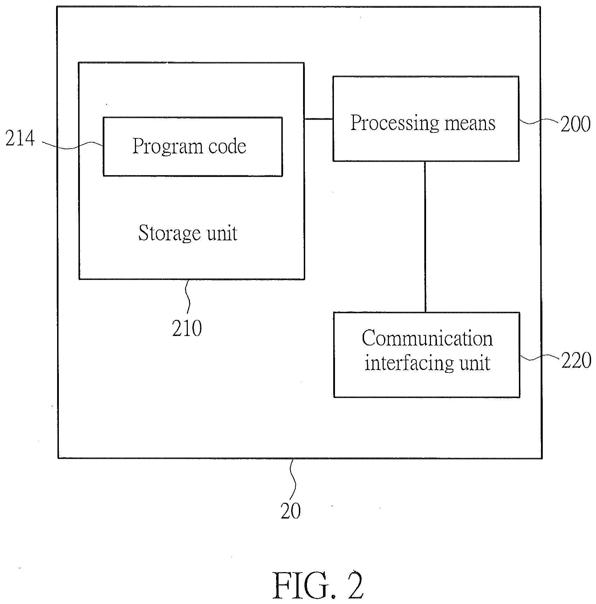

Fig. 2 is a schematic diagram of a communication device 20 according to an example of the present invention. The communication device 20 may be a communication device or the network shown in Fig. 1, but is not limited herein. The communication device 20 may include a processing means 200 such as a microprocessor or Application Specific Integrated Circuit (ASIC), a storage unit 210 and a communication interfacing unit 220. The storage unit 210 may be any data storage device that may store a program code 214, accessed and executed by the processing means 200. Examples of the storage unit 210 include but are not limited to a subscriber identity module (SIM), read-only memory (ROM), flash memory, random-access memory (RAM), Compact Disc Read-Only Memory (CD-ROM), digital versatile disc-ROM (DVD-ROM), Blu-ray Disc-ROM (BD-ROM), magnetic tape, hard disk, optical data storage device, non-volatile storage unit, non-transitory computer-readable medium (e.g., tangible media), etc. The communication interfacing unit 220 is preferably a transceiver and is used to transmit and receive signals (e.g., data, messages and/or packets) according to processing results of the processing means 200. For the sake of simplicity, UE is taken as an example of the communication device in the following embodiments. It should be noted that the scope of the invention is not limited thereto.

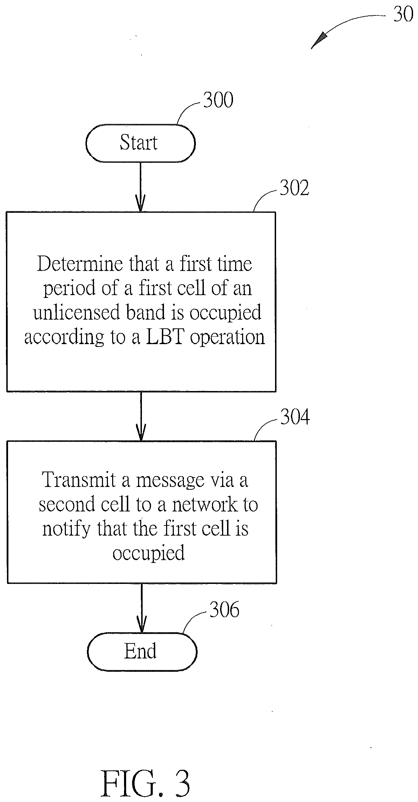

Fig. 3 is a flowchart of a process 30 according to an example of the present invention. The process 30 may be utilized in a communication device shown in Fig. 1, to handle resource availability of an unlicensed band. The process 30 may be compiled into the program code 214 and includes the following steps:
Step 300: Start.
Step 302: Determine that a first time period of a first cell of an unlicensed band is occupied according to a listen-before-talk (LBT) operation.
Step 304: Transmit a message via a second cell to a network to notify that the first cell is occupied.
Step 306: End.

According to the process 30, the communication device (e.g., UE) may determine that a first time period of a first cell (e.g., serving cell) of an unlicensed band is occupied according to a LBT operation (e. g. , carrier sensing). The LBT is a technique that a device first senses a radio channel before it starts a transmission via the radio channel. If the radio channel has been used by other devices, the device is not allowed to perform the transmission. Then, the communication device may transmit a message via a second cell to a network (e.g., eNB) to notify that the first cell is occupied. That is, the communication device notifies the information of the first cell to the network such the network does not try to receive an empty transmission scheduled in the first time period (e.g., subframes) of the first cell. Thus, the network may operate correctly according to the message.

Realization of the process 30 is not limited to the above description.

In one example, the second cell may be in a licensed band, or may be in the unlicensed band. That is, the message may be transmitted in a cell of the licensed band which is more reliable, or may be transmitted in another cell of the unlicensed band which is in a lower traffic load state or in a state with a lower level of interference.

In one example, the message in the process 30 may be transmitted in a resource of the second cell, and the resource may be indicated by a physical DL control channel (PDCCH) transmitted by the network. In detail, when the network transmits a PDCCH in a subframe m to the communication device to request a UL (re) transmission, the PDCCH may also indicate a resource (e.g., physical resource) in a subframe (m+n) for transmitting the message, where the value n may be a predetermined value or may be configured by the network. If an automatic UL transmission is allowed for the communication device, the same resource assigned via the PDCCH is allocated for the communication device to transmit the message in a subframe (m'+n) for a non-adaptive retransmission, where the value m' is determined according to when a physical hybrid automatic repeat request (HARQ) indicator channel (PHICH) is supposed to be received by the communication device.

In one example, the message in the process 30 may be transmitted in a resource of the second cell, and the resource may be configured by a radio resource control (RRC) message (e.g., RRCConnectionRecofniguration) transmitted by the network. Accordingly, the UE may transmit the message in a dedicated resource according to the RRC message. In one example, the message in the process 30 may include a medium access control (MAC) element comprising a field indicating an identity of the first cell. Accordingly, the network may know which cell is occupied according to the identity.

In one example, the communication device in the process 30 may further perform a backoff operation for a second time period, and may transmit information of the second time period to the network. Further, the second time period may include a plurality of subframes or a plurality of carrier-sensing slots. In detail, the communication device may perform a backoff procedure and may indicate how long the network has to wait (e.g., according to a length of a backoff time of the backoff procedure), before the network transmits a PDCCH to the communication device to request a new transmission or a retransmission. When receiving the PDCCH, the communication device may indicate how long the network has to wait (e.g., a length of the remaining backoff time) again, if the communication device is still in a backoff state of the backoff procedure. While waiting for the communication device, the network may assign a resource in the first cell that have been granted to the communication device to another communication device in order to use the resource efficiently.

In one example, the communication device in the process 30 may further perform a backoff operation, and may indicate a completion of the backoff operation to the network when the backoff operation is completed. That is, different from the previous example, the communication device notifies the end of the backoff operation to the network such that the network may not need to try to request a new transmission or a retransmission repeatedly. There are various ways of notifying the end of the back operation, and are described as follows.

In one example, the communication device may perform a random access procedure to indicate the completion of the backoff operation to the network. In detail, for a contention-based random access procedure, the network knows a backoff period of the backoff operation ends, when the network receives a message (e.g., msg3) transmitted by the communication device on the first cell. For a contention-free random access procedure, the network transmits a dedicated preamble to the communication device (e.g., by transmitting a MAC control element), after receiving the message from the communication device. The communication device starts the contention free random access procedure by using the dedicated preamble at the end of the backoff period. When the network receives the dedicated preamble, the network knows that the backoff operation is completed on the first cell.

In one example, the communication device may transmit a MAC control element including a field indicating an identity of the first cell to indicate the completion of the backoff operation to the network. A logic channel identify may be assigned to the MAC control element in order to distinguish the MAC control element in the present example from MAC control elements for other purposes. In one example, the communication device may transmit a physical layer signaling to indicate the completion of the backoff operation to the network. The physical layer signaling may be a dedicated signaling or a physical UL control channel (PUCCH).

In one example, the communication device may disable an automatic UL transmission on the first cell. That is, the communication device may disable the first cell which is determined to be occupied. Further, the automatic UL transmission may be for at least one HARQ process on the first cell. That is, the communication device may disable the automatic UL transmission for all the at least one HARQ process. In one example, the communication device may enable the automatic UL transmission on the first cell again, when the communication device receives a PDCCH transmitted by the network which indicates a transmission or receives a MAC packet data unit (PDU) indicating an identity of the first cell. In another example, the communication device may enable the automatic UL transmission on the first cell again, when the communication device receives a PDCCH transmitted by the network which indicates a transmission and the communication device is not in a backoff state of a backoff operation. That is, the automatic UL transmission may be enabled again, if any of the above conditions is satisfied.

It should be noted that although the examples are illustrated based on the process 30, to clarify the operations of the communication device. The examples can be combined and/or modified arbitrarily according to system requirements and/or design considerations. The following is an example illustrating a combination of the above description.

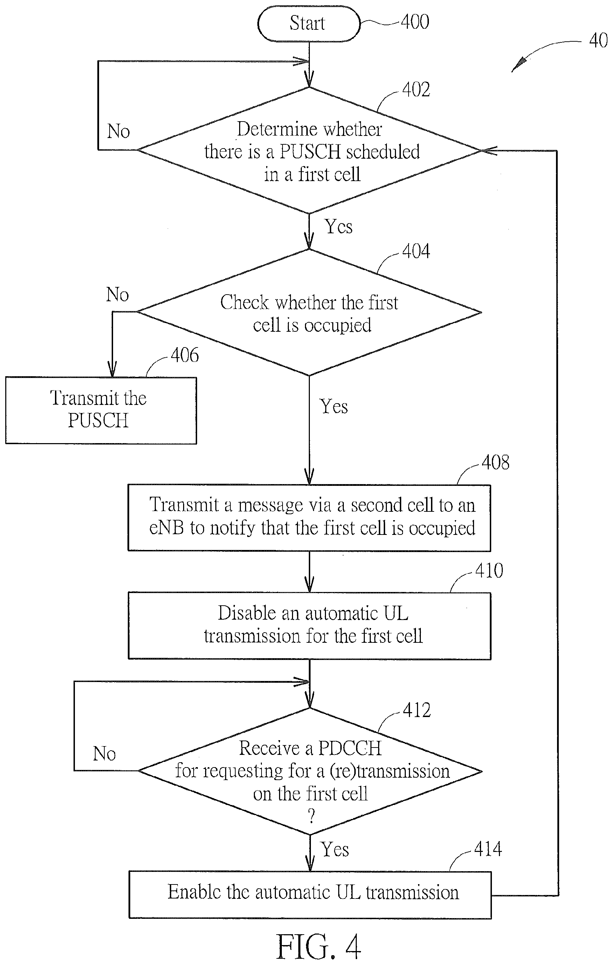

Fig. 4 is a flowchart of a process according to an example of the present invention. A UE starts to communicate with a network (step 400). The UE determines whether there is a PUSCH scheduled to be transmitted in a subframe x of a first cell of an unlicensed band according to a LBT operation (step 402). If yes, the UE proceeds to step 404; otherwise, the UE keeps waiting for a scheduled PUSCH. The UE checks whether the first cell is occupied within the subframes (x-y, x-y+z) (step 404), where (x-y+z) is preferably not greater than x. If the first cell is determined to be not occupied, the UE transmits the PUSCH in the subframe x (step 406). Otherwise, the UE determines that the first cell is occupied, and the UE transmits a message via a second cell to an eNB to notify that the first cell is occupied (step 408). The second cell may be in a licensed band, or may be another cell in the unlicensed band. In addition, the UE disables an automatic UL transmission for the first cell which has been enabled for a time period (step 410). Then, the UE waits for a PDCCH transmitted by the eNB which is for requesting for a (re) transmission on the first cell (step 412). If the PDCCH is received, the UE enables the automatic UL transmission (step 414), and proceeds to step 402 to prepare the transmission. Otherwise, the UE keeps waiting for the PDCCH.

Those skilled in the art should readily make combinations, modifications and/or alterations on the abovementioned description and examples. The abovementioned description, steps and/or processes including suggested steps can be realized by means that could be hardware, software, firmware (known as a combination of a hardware device and computer instructions and data that reside as read-only software on the hardware device), an electronic system, or combination thereof. An example of the means may be the communication device 20.

To sum up, the present invention provides a communication device and a method for handling resource availability of an unlicensed band. The communication device notifies a network that a resource of a cell of an unlicensed band is not available, if the communication device determines that the resource if occupied. Thus, the network operates correctly according to the information provided by the communication device.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A communication device (20) for handling resource availability of an unlicensed band, comprising:
a storage unit (210) for storing instructions of:
determining that a first time period of a first cell of an unlicensed band is occupied according to a listen-before-talk, LBT, operation, wherein the LBT operation is performed before an uplink, UL, transmission; and
transmitting a message via a second cell to a network to notify that the first cell is occupied, wherein the second cell is in a licensed band, or is in the unlicensed band; and
a processing means (200), coupled to the storage unit (210), configured to execute the instructions stored in the storage unit (210).

2. The communication device (20) of claim 1, wherein the message is transmitted in a resource of the second cell, and the resource is indicated by a physical downlink control channel, PDCCH, transmitted by the network.

3. The communication device (20) of claim 1, wherein the message is transmitted in a resource of the second cell, and the resource is configured by a radio resource control, RRC, message transmitted by the network.

4. The communication device (20) of claim 1, wherein the message comprises a medium access control, MAC, element comprising a field indicating an identity of the first cell.

5. The communication device (20) of claim 1, wherein the storage unit (210) further stores the instruction of:
performing a backoff operation for a second time period; and transmitting information of the second time period to the network.

6. The communication device (20) of claim 5, wherein the second time period comprises a plurality of subframes or a plurality of carrier-sensing slots.

7. The communication device (20) of claim 1, wherein the storage unit (210) further stores the instruction of:
performing a backoff operation; and
indicating a completion of the backoff operation to the network, when the backoff operation is completed.

8. The communication device (20) of claim 7, wherein the communication device (20) performs a random access procedure to indicate the completion of the backoff operation to the network.

9. The communication device (20) of claim 7, wherein the communication device (20) transmits a MAC control element comprising a field indicating an identity of the first cell to indicate the completion of the backoff operation to the network.

10. The communication device (20) of claim 7, wherein the communication device (20) transmits a physical layer signaling to indicate the completion of the backoff operation to the network.

11. The communication device (20) of claim 1, wherein the storage unit (210) further stores the instruction of:
disabling an automatic UL transmission on the first cell.

12. The communication device (20) of claim 11, wherein the automatic UL transmission is for at least one hybrid automatic repeat request, HARQ, process on the first cell.

13. The communication device (20) of claim 11, wherein the storage unit (210) further stores the instruction of:
enabling the automatic UL transmission on the first cell, when the communication device (20) receives a PDCCH transmitted by the network which indicates a transmission or receives a MAC packet data unit, PDU, indicating an identity of the first cell.

14. The communication device (20) of claim 11, wherein the storage unit (210) further stores the instruction of:
enabling the automatic UL transmission on the first cell, when the communication device (20) receives a PDCCH transmitted by the network which indicates a transmission and the communication device (20) is not in a backoff state of a backoff operation.

## Patentansprüche

1. Eine Kommunikationseinrichtung (20) zum Handhaben einer Ressourcenverfügbarkeit eines nicht lizensierten Bandes, die Folgendes aufweist:
eine Speichereinheit (210) zum Speichern von Instruktionen bzw. Befehlen zum:
Bestimmen, dass eine erste Zeitperiode einer ersten Zelle eines nicht lizensierten Bandes gemäß eines Hören-Vor-Sprechen- bzw. LBT-Betriebs (LBT = listen-before-talk) belegt ist, wobei der LBT-Betrieb vor einer Aufwärtsverbindungs- bzw. UL-Sendung (UL = uplink) durchgeführt wird; und
Senden einer Nachricht über eine zweite Zelle an ein Netzwerk um mitzuteilen, dass die erste Zelle belegt ist, wobei die zweite Zelle in einem lizensierten Band oder in dem nicht lizensierten Band ist; und
Verarbeitungsmittel (200), die an die Speichereinheit (210) gekoppelt sind, die konfiguriert sind zum Ausführen der Instruktionen, die in der Speichereinheit (210) gespeichert sind.

2. Kommunikationseinrichtung (20) nach Anspruch 1, wobei die Nachricht in einer Ressource der zweiten Zelle gesendet wird, und die Ressource durch einen physikalischen Abwärtsverbindungssteuerkanal bzw. PDCCH (PDCCH = physical downlink control channel) angezeigt wird, der durch das Netzwerk gesendet wird.

3. Kommunikationseinrichtung (20) nach Anspruch 1, wobei die Nachricht in einer Ressource der zweiten Zelle gesendet wird, und die Ressource konfiguriert ist durch eine Funkressourcensteuerungs- bzw. RRC-Nachricht (RRC = radio resource control), die durch das Netzwerk gesendet wird.

4. Kommunikationseinrichtung (20) nach Anspruch 1, wobei die Nachricht ein Medienzugriffssteuerungs- bzw. MAC-Element aufweist, das ein Feld aufweist, das eine Identität der ersten Zelle anzeigt.

5. Kommunikationseinrichtung (20) nach Anspruch 1, wobei die Speichereinheit (210) weiter den Befehl speichert zum:
Durchführen eines Backoff-Betriebs für eine zweite Zeitperiode; und Senden von Information bezüglich der zweiten Zeitperiode an das Netzwerk.

6. Kommunikationseinrichtung (20) nach Anspruch 5, wobei die zweite Zeitperiode eine Vielzahl von Subrahmen oder eine Vielzahl von Trägerabfühlschlitzen bzw. Carrier-Sensing-Slots aufweist.

7. Kommunikationseinrichtung (20) nach Anspruch 1, wobei die Speichereinheit (210) weiter die Instruktion speichert zum:
Durchführen eines Backoff-Betriebs; und
Anzeigen eines Abschlusses des Backoff-Betriebs gegenüber dem Netzwerk, wenn der Backoff-Betrieb abgeschlossen ist.

8. Kommunikationseinrichtung (20) nach Anspruch 7, wobei die Kommunikationseinrichtung (20) eine Direktzugriffs- bzw. Random-Access-Prozedur durchführt, um den Abschluss des Backoff-Betriebs gegenüber dem Netzwerk anzuzeigen.

9. Kommunikationseinrichtung (20) nach Anspruch 7, wobei die Kommunikationseinrichtung (20) ein MAC-Steuerungselement sendet, das ein Feld aufweist, das eine Identität der ersten Zelle anzeigt, um den Abschluss des Backoff-Betriebs gegenüber dem Netzwerk anzuzeigen.

10. Kommunikationseinrichtung (20) nach Anspruch 7, wobei die Kommunikationseinrichtung (20) eine Signalisierung der physikalischen Schicht sendet, um den Abschluss des Backoff-Betriebs gegenüber dem Netzwerk anzuzeigen.

11. Kommunikationseinrichtung (20) nach Anspruch 1, wobei die Speichereinheit (210) weiter die Instruktion speichert zum:
Deaktivieren einer automatischen Aufwärtsverbindungs- bzw. UL-Sendung auf der ersten Zelle.

12. Kommunikationseinrichtung (20) nach Anspruch 11, wobei die automatische UL-Sendung für wenigstens einen HARQ-Prozess (HARQ = hybrid automatic repeat request) auf der ersten Zelle ist.

13. Kommunikationseinrichtung (20) nach Anspruch 11, wobei die Speichereinheit (210) weiter die Instruktion speichert zum:
Aktivieren der automatischen UL-Sendung auf der ersten Zelle, wenn die Kommunikationseinrichtung (20) einen PDCCH empfängt, der durch das Netzwerk gesendet wird, welcher eine Sendung anzeigt oder eine MAC-Paketdateneinheit bzw. MAC-PDU (PDU = packet data unit) empfängt, die eine Identität der ersten Zelle anzeigt.

14. Kommunikationseinrichtung (20) nach Anspruch 11, wobei die Speichereinheit (210) weiter die Instruktion speichert zum:
Aktivieren der automatischen UL-Sendung auf der ersten Zelle, wenn die Kommunikationseinrichtung (20) einen PDCCH empfängt, der durch das Netzwerk gesendet wird, welcher eine Sendung anzeigt und die Kommunikationseinrichtung (20) nicht in einem Backoff-Zustand eines Backoff-Betriebs ist.

## Revendications

1. Dispositif de communication (20) pour gérer la disponibilité de ressources d'une bande sans licence, comprenant :
un module de stockage (210) pour mémoriser les instructions suivantes :
déterminer qu'une première période de temps d'une première cellule d'une bande sans licence est occupée selon un fonctionnement du type écouter avant de parler, LBT, le fonctionnement LBT étant réalisé avant une transmission en liaison montante, UL ; et
émettre un message par l'intermédiaire d'une deuxième cellule vers un réseau pour notifier que la première cellule est occupée, la deuxième cellule étant dans une bande avec licence, ou étant dans la bande sans licence ; et
des moyens de traitement (200), couplés au module de stockage (210), agencés pour exécuter les instructions mémorisées dans le module de stockage (210).

2. Dispositif de communication (20) selon la revendication 1, dans lequel le message est transmis dans une ressource de la deuxième cellule, et la ressource est indiquée par un canal de commande de liaison descendante physique, PDCCH, transmis par le réseau.

3. Dispositif de communication (20) selon la revendication 1, dans lequel le message est émis dans une ressource de la deuxième cellule, et la ressource est configurée par un message de contrôle de ressources radio, RRC, émis par le réseau.

4. Dispositif de communication (20) selon la revendication 1, dans lequel le message comprend un élément de commande d'accès au support, MAC, comprenant un champ indiquant une identité de la première cellule.

5. Dispositif de communication (20) selon la revendication 1, dans lequel le module de stockage (210) mémorise en outre l'instruction suivante :
réaliser une opération de réduction de puissance pendant une deuxième période temporelle ; et
émettre des informations de la deuxième période temporelle vers le réseau.

6. Dispositif de communication (20) selon la revendication 5, dans lequel la deuxième période temporelle comprend une pluralité de sous-trames ou une pluralité de créneaux de détection de porteuse.

7. Dispositif de communication (20) selon la revendication 1, dans lequel le module de stockage (210) mémorise en outre l'instruction suivante :
réaliser une opération de réduction de puissance ; et
indiquer au réseau l'achèvement de l'opération de réduction de puissance lorsque l'opération de réduction de puissance est achevée.

8. Dispositif de communication (20) selon la revendication 7, dans lequel le dispositif de communication (20) réalise une procédure d'accès aléatoire pour indiquer au réseau l'achèvement de l'opération de réduction de puissance.

9. Dispositif de communication (20) selon la revendication 7, dans lequel le dispositif de communication (20) émet un élément de contrôle MAC comprenant un champ indiquant une identité de la première cellule pour indiquer au réseau l'achèvement de l'opération de réduction de puissance.

10. Dispositif de communication (20) selon la revendication 7, dans lequel le dispositif de communication (20) émet une signalisation de couche physique pour indiquer au réseau l'achèvement de l'opération de réduction de puissance.

11. Dispositif de communication (20) selon la revendication 1, dans lequel le module de stockage (210) mémorise en outre l'instruction suivante :
désactiver une transmission UL automatique sur la première cellule.

12. Dispositif de communication (20) selon la revendication 11, dans lequel la transmission UL automatique est destinée à au moins un processus de requête à répétition automatique hybride, HARQ, sur la première cellule.

13. Dispositif de communication (20) selon la revendication 11, dans lequel le module de stockage (210) mémorise en outre l'instruction suivante :
activer la transmission UL automatique sur la première cellule lorsque le dispositif de communication (20) reçoit un PDCCH émis par le réseau qui indique une émission, ou reçoit une unité de paquets de données MAC, PDU, indiquant une identité de la première cellule.

14. Dispositif de communication (20) selon la revendication 11, dans lequel le module de stockage (210) mémorise en outre l'instruction suivants :
activer la transmission UL automatique sur la première cellule, lorsque le dispositif de communication (20) reçoit un PDCCH transmis par le réseau qui indique une transmission et le dispositif de communication (20) n'est pas dans un état de réduction de puissance d'une opération de réduction de puissance.
